# FASCICULE DE BREVET EUROPEEN

(11) **EP 3 328 669 B1**
(45) Date de publication et mention de la délivrance du brevet: **30.03.2022**
(21) Numéro de dépôt: 16734333.4
(22) Date de dépôt: 30.06.2016
(51) Int. Cl.: B60H 1/00

(54) **SYSTEME DE COMMANDE POUR INSTALLATION DE CONDITIONNEMENT D'AIR D'UN VEHICULE AUTOMOBILE**
STEUERUNGSSYSTEM FÜR EINE KLIMATISIERUNGSANLAGE EINES KRAFTFAHRZEUGS
CONTROL SYSTEM FOR AIR CONDITIONING SYSTEM OF A MOTOR VEHICLE

(30) Priorité: 30.07.2015 FR 1557282
(43) Date de publication de la demande: 06.06.2018
(73) Titulaire: Valeo Systèmes Thermiques, 78320 Le Mesnil-Saint-Denis (FR)
(72) Inventeur: NEVEU, Daniel, 91300 Massy (FR); RIVET, Gilles, 28500 Charpont (FR); ELBHAR, Thierry, 78610 Les Breviaires (FR); FEUILLARD, Vincent, 78320 Le Mesnil Saint-Denis (FR); KARL, Stefan, 78112 Fourqueux (FR); BARAT, Didier, 78690 Les Essarts-le-Roi (FR); GOUR, Josselin, 75014 Paris (FR)
(74) Mandataire: Valeo Systèmes Thermiques
(86) Numéro de dépôt international: PCT/EP2016/065284
(87) Numéro de publication internationale: WO 2017/016784

(56) Documents cités:
- WO-A1-2014/105993
- DE-A1-102013 007 080
- JP-A- 2003 341 337
- US-A1- 2002 161 501

## Description

L'invention concerne un système de commande pour installation de chauffage, ventilation et/ou climatisation d'un véhicule automobile et plus particulièrement les systèmes comportant au moins un capteur de température.

En effet, il est connu de mesurer la température intérieure de l'habitacle et la température corporelle du ou des occupants à différents niveaux, afin de calculer un coefficient de confort thermique. Ce coefficient de confort thermique est calculé selon une formule mathématique basée sur le ressenti thermique d'un panel représentatif de la population auquel la température corporelle a été mesurée dans différentes conditions. Le coefficient de confort thermique calculé est ensuite utilisé pour le réglage de la température d'air, du débit d'air et de la distribution d'air au sein de l'installation de chauffage, ventilation et/ou climatisation.

Afin de mesurer ces différentes températures, le système de commande comporte généralement une caméra infrarouge qui fait office de capteur de température. Néanmoins, la caméra infrarouge doit avoir une forte définition ce qui implique l'utilisation d'une caméra infrarouge coûteuse.

Un système de commande pour installation de chauffage, ventilation et/ou climatisation d'un véhicule automobile est connu du document DE 10 2013 007080 A1. Un des buts de la présente invention est donc de remédier au moins partiellement aux inconvénients de l'art antérieur et de proposer un système de commande permettant l'utilisation d'une caméra infrarouge à faible définition.

La présente invention concerne donc un système de commande pour installation de chauffage, ventilation et/ou climatisation d'un véhicule automobile, ledit système de commande comportant :
▪ une première caméra sensible aux longueurs d'ondes situées dans le spectre infrarouge moyen, et
▪ un dispositif de traitement et d'analyse d'images apte à effectuer des mesures de température sur les images de la première caméra et à calculer à partir de ces mesures au moins un coefficient de confort thermique d'au moins un occupant du véhicule automobile,
le coefficient de confort thermique étant utilisé pour le réglage de la température d'air, du débit d'air et de la distribution d'air au sein de l'installation de chauffage, ventilation et/ou climatisation,
le système de commande comportant en outre une deuxième caméra sensible aux longueurs d'ondes situées dans le spectre visible et/ou dans le spectre infrarouge proche,
le dispositif de traitement et d'analyse étant apte à repérer des points remarquables pour le confort thermique de l'occupant sur les images de la deuxième caméra et de reporter lesdits points remarquables sur les images de la première caméra, les mesures de température de l'occupant étant réalisées sur ces points remarquables.

Il est alors possible avec un tel système de commande d'utiliser une caméra infrarouge à faible définition réduisant ainsi les coûts.

Le fait d'utiliser les images de la deuxième caméra pour effectuer le repérage des points remarquables pour ensuite les reporter sur les images de la première caméra, permet l'utilisation d'une première caméra ayant une définition réduite et donc moins chère. En effet pour que sur les images d'une première caméra infrarouge il soit possible discriminer les point remarquables, cette dernière doit être d'une définition importante.

Selon un autre aspect de l'invention, la définition de la première caméra est inférieure à la définition de la deuxième caméra.

Selon un autre aspect de l'invention, le rapport entre la définition de la première caméra et la définition de la deuxième caméra est compris entre 9/4000 et 9/25000.

Selon un autre aspect de l'invention, la définition de la première caméra est comprise entre 60×60 et 150×150 pixels et que la définition de la deuxième caméra est comprise entre 1 et 10 mégapixels.

Selon un autre aspect de l'invention, la première caméra a une définition de 80×80 pixels.

Selon un autre aspect de l'invention, la deuxième caméra a une définition de 3 mégapixels.

Selon un autre aspect de l'invention, les première et deuxième caméras ont le visage de l'occupant dans leur champ respectif.

Selon un autre aspect de l'invention, les points remarquables comprennent au moins le front, le nez et les joues de l'occupant du véhicule automobile.

Selon un autre aspect de l'invention, les points remarquables comprennent également le fond de l'image et une portion des vêtements de l'occupant.

Selon un autre aspect de l'invention, les première et deuxième cameras ont une focale identique.

Selon un autre aspect de l'invention, les première et deuxième cameras sont positionnées côte à côte.

Selon un autre aspect de l'invention, la deuxième caméra est également utilisée pour d'autres fonctions du véhicule nécessitant une observation de l'habitacle du véhicule automobile.

Selon un autre aspect de l'invention, la première caméra est réglée pour capter les longueurs d'ondes comprises entre 3 et 50µm, et plus particulièrement entre 8 et 12µm.

La présente invention concerne également un procédé de commande d'une installation de chauffage, ventilation et/ou climatisation d'un véhicule automobile comportant un système de commande tel que décrit précédemment, ledit procédé comportant les étapes suivantes :
▪ prise d'images dans le dans le spectre infrarouge moyen par la première caméra et prise d'images dans le spectre visible et/ou dans le spectre infrarouge proche par la deuxième caméra,
▪ analyse des images de la deuxième caméra par le dispositif de traitement et d'analyse et repérage des points remarquables pour le confort thermique de l'occupant,
▪ report par le dispositif de traitement et d'analyse des points remarquables sur les images de la première caméra et mesure de la température à ces points remarquables,
▪ calcul d'un coefficient de confort thermique par le dispositif de traitement et d'analyse à partir des mesures de la température,
▪ réglage de la température d'air, du débit d'air et de la distribution d'air au sein de l'installation de chauffage, ventilation et/ou climatisation en fonction de la valeur du coefficient de confort thermique.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre une représentation schématique d'un système de commande et d'une installation de chauffage, ventilation et/ou climatisation d'un véhicule automobile,
- la figure 2 montre une représentation schématique des images captées par les caméras du système de commande.

Les éléments identiques sur les différentes figures, portent les mêmes références.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

Dans la présente description on peut indexer certains éléments ou paramètres, comme par exemple premier élément ou deuxième élément ainsi que premier paramètre et second paramètre ou encore premier critère et deuxième critère etc. Dans ce cas, il s'agit d'un simple indexage pour différencier et dénommer des éléments ou paramètres ou critères proches mais non identiques. Cette indexation n'implique pas une priorité d'un élément, paramètre ou critère par rapport à un autre et on peut aisément interchanger de telles dénominations sans sortir du cadre de la présente description. Cette indexation n'implique pas non plus un ordre dans le temps par exemple pour apprécier tel ou tels critères.

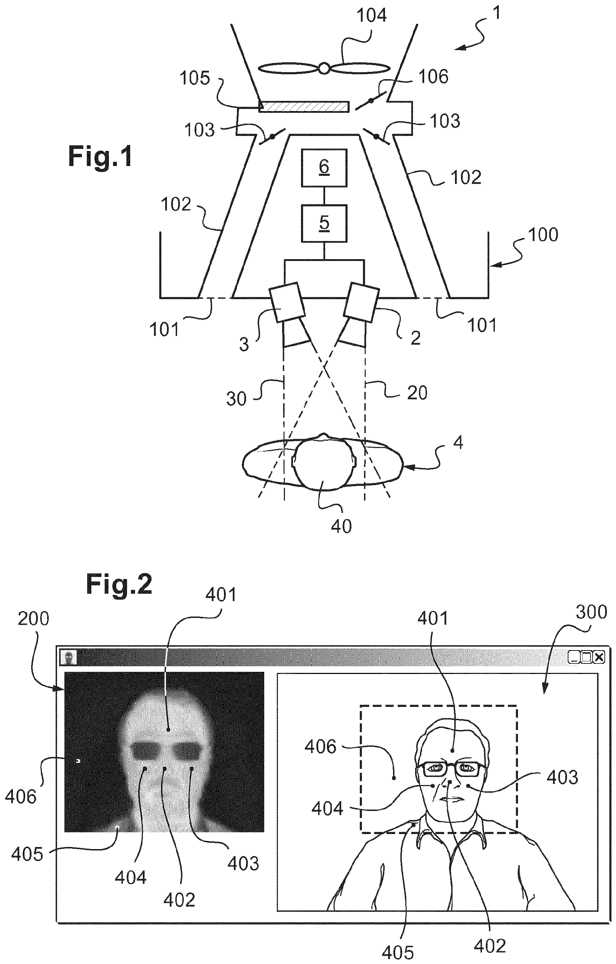

La figure 1 montre un système de commande 1 comportant :
- une première caméra 2 sensible aux longueurs d'ondes situées dans le spectre infrarouge moyen,
- une deuxième caméra 3 sensible aux longueurs d'ondes situées dans le spectre visible et/ou dans le spectre infrarouge proche, et
- un dispositif 5 de traitement et d'analyse d'images.

Le dispositif 5 de traitement et d'analyse est apte à repérer des points remarquables 401,402,403,404,405,406 pour le confort thermique d'au moins un occupant 4 du véhicule automobile, sur les images 300 de la deuxième caméra 3, ainsi qu'à reporter lesdits points remarquables 401,402,403,404,405,406 sur les images 200 de la première caméra 2. Sur les images 200 de la première caméra 2, le dispositif 5 de traitement et d'analyse est apte à mesurer la température de l'occupant 4 du véhicule automobile. Ces mesures de température de l'occupant 4 sont réalisées sur les points remarquables 401,402,403,404,405,406 définis sur les images 300 de la deuxième caméra 3 et reportés sur les images 200 de la première caméra 2. Ces images sont notamment visibles à la figure 2. Pour une bonne mesure de la température, la première caméra 2 est de préférence sensible aux longueurs d'ondes comprises entre 3 et 50µm, et plus particulièrement entre 8 et 12µm, qui correspondent aux longueurs d'ondes émises par les organismes vivants.

La définition de la première caméra 2 est inférieure à la définition de la deuxième caméra 3. Le rapport entre la définition de la première caméra 2 et la définition de la deuxième caméra 3 est de préférence compris entre 9/4000 et 9/25000. Plus particulièrement, la définition de la première caméra 2 est comprise entre 60×60 et 150×150 pixels, préférentiellement entre 70×70 et 120×120 pixels, et la définition de la deuxième caméra 3 est comprise entre 1 et 10 mégapixels. Par exemple, dans le cadre de l'invention, la définition de la première caméra 2 peut être de l'ordre de 80×80 pixels et la définition de la deuxième caméra peut quant à elle être de l'ordre de 3 mégapixels. Ces valeurs de définition des première 2 et deuxième 3 caméras sont un bon compromis entre leur définition nécessaire pour réaliser leurs fonctions et leurs coûts.

Le fait d'utiliser les images 300 de la deuxième caméra 3 pour effectuer le repérage des points remarquables 401,402,403,404,405,406 pour ensuite les reporter sur les images 200 de la première caméra 2, permet l'utilisation d'une première caméra 2 ayant une définition réduite et donc moins chère. En effet pour que sur les images 200 d'une première caméra 2 infrarouge il soit possible discriminer les point remarquables, cette dernière doit être d'une définition importante.

Le fait que la deuxième caméra 3 soit sensible aux longueurs d'ondes situées dans le spectre infrarouge proche permet notamment de capter une image permettant le repérage des points remarquables 401,402,403,404,405,406 même en lumière faible ou de nuit.

Les mesures effectuées au niveau des points remarquables 401,402,403,404,405,406 sont utilisées pour le réglage de la température d'air, du débit d'air et de la distribution d'air au sein de l'installation de chauffage, ventilation et/ou climatisation. Cela peut être effectué par un dispositif électronique de commande 6 qui reçoit les mesures effectuées par le dispositif 5 de traitement et d'analyse, et qui calcule à partir de ces mesures un coefficient de confort thermique. Ce coefficient de confort thermique est calculé selon une formule mathématique basée sur les mesures de températures effectuées et sur le ressenti thermique d'un panel représentatif de la population, auquel la température corporelle a été mesurée dans différentes conditions. Selon la valeur de ce coefficient de confort thermique, le dispositif électronique de commande 6 influe sur des éléments de l'installation de chauffage, ventilation et/ou climatisation d'un véhicule automobile (ou HVAC) afin de régler la température d'air, le débit d'air et la distribution d'air au sein de ladite installation de chauffage, ventilation et/ou climatisation.

Le dispositif électronique de commande 6 peut ainsi jouer sur l'orientation, l'ouverture ou la fermeture d'embouts d'aération 101 placés sur le tableau de bord 100, ou à l'arrière du véhicule automobile. Le dispositif électronique de commande 6 peut également influer sur l'ouverture ou la fermeture de volets d'obturation 103 de conduits d'aération 102, sur l'arrêt ou l'allumage d'un propulseur d'air 104, sur la mise en marche de la climatisation, représentée ici par son évaporateur 105, et de la quantité d'air traversant ledit évaporateur 105 via par exemple un volet 106. Le dispositif électronique de commande 6 peut également commander d'autres éléments de l'installation de chauffage, ventilation et/ou climatisation non représentés tels qu'un dispositif de chauffage électrique ou le passage d'un mode de circulation d'air recyclé ou venant de l'extérieur.

Les points remarquables comprennent de préférence au moins le front 401, le nez 402 et les joues 403, 404. Ces points sont considérés comme remarquables du fait qu'ils sont facilement reconnaissables par le dispositif 5 de traitement et d'analyseur les images 300 de la deuxième caméra 3 et qu'ils correspondent également à des points important pour la mesure de la température corporelle de l'occupant 4. En effet, le nez 402 est un point où la température du visage est faible tandis que les joues 403, 404 ainsi que le front sont des zones larges où la température corporelle est relâchée et donc facilement mesurable. Les première 2 et deuxième 3 caméras ont ainsi toutes deux le visage 40 de l'occupant 4 dans leur champ 20, 30 respectif. En outre, les points remarquables peuvent également comprendre le fond 406 de l'image et également une portion des vêtements 405 dudit occupant 4.

Le report des points remarquables 401,402,403,404,405,406 depuis l'image 300 de la deuxième caméra 3 sur l'image 200 de la première se fait par calcul mathématique en connaissant la position des première 2 et deuxième 3 caméras l'une par rapport à l'autre ainsi que leurs orientations. Afin de limiter les distorsions entre les images provenant des deux caméras 2, 3 ainsi que pour limiter la complexité des calculs réalisés par le dispositif 5 de traitement et d'analyse les première 2 et deuxième 3 caméras sont de préférence positionnées côte à côte. Pour les mêmes raisons, les première 2 et deuxième 3 caméras ont de préférence une focale proche voire même identique.

Afin de limiter encore les coûts de production, la deuxième caméra 3 peut être également utilisée pour d'autres fonctions du véhicule nécessitant une observation de l'habitacle du véhicule automobile, comme par exemple un système de surveillance de somnolence du conducteur.

La présente invention concerne donc également un procédé de commande d'une installation de chauffage, ventilation et/ou climatisation d'un véhicule automobile comportant un système de commande 1 tel que décrit précédemment, ledit procédé comportant les étapes suivantes :
▪ prise d'images 200 dans le spectre infrarouge moyen par la première caméra 2 et prise d'images 300 dans le spectre visible et/ou dans le spectre infrarouge proche par la deuxième caméra 3,
▪ analyse des images 300 de la deuxième caméra 3 par le dispositif 5 de traitement et d'analyse et repérage des points remarquables 401,402,403,404,405,406 pour le confort thermique de l'occupant 4,
▪ report par le dispositif 5 de traitement et d'analyse des points remarquables 401,402,403,404,405,406 sur les images 200 de la première caméra 2 et mesure de la température à ces points remarquables 401,402,403,404,405,406,
▪ calcul d'un coefficient de confort thermique par le dispositif 5 de traitement et d'analyse à partir des mesures de la température, et
▪ réglage de la température d'air, du débit d'air et de la distribution d'air au sein de l'installation de chauffage, ventilation et/ou climatisation en fonction de la valeur du coefficient de confort thermique.

Pour un coefficient de confort thermique indiquant que l'occupant 4 a froid, le système de commande 1 va par exemple enclencher le chauffage de l'air destiné à l'habitable jusqu'à ce que le coefficient de confort thermique indique un état neutre. Au contraire, si le coefficient de confort thermique indique que l'occupant 4 a chaud, le système de commande 1 va par exemple enclencher la climatisation et donc le refroidissement de l'air destiné à l'habitable jusqu'à ce que le coefficient de confort thermique indique un état neutre.

Le système de commande 1 peut également constater que le coefficient de confort thermique est différent selon le coté droit ou gauche de l'occupant 4, par exemple du fait d'une exposition directe au soleil d'un de ses côtés. Dans ce cas de figure, le système de commande peut ajuster la température de l'air ainsi que son orientation pour obtenir une valeur de coefficient de confort thermique identique de chaque côté et indiquant état neutre.

Ainsi, on voit bien, que du fait de l'utilisation de deux caméras, une dans le spectre infrarouge moyen et une dans le spectre visible et/ou infrarouge proche, il est possible de mesurer la température et de calculer un coefficient de confort thermique à moindre coûts.

## Revendications

1. Système de commande (1) pour installation de chauffage, ventilation et/ou climatisation d'un véhicule automobile, ledit système de commande (1) comportant :
+ une première caméra (2) sensible aux longueurs d'ondes situées dans le spectre infrarouge moyen, et
+ un dispositif (5) de traitement et d'analyse d'images apte à effectuer des mesures de température sur les images de la première caméra (2) et à calculer à partir de ces mesures au moins un coefficient de confort thermique d'au moins un occupant (4) du véhicule automobile,
le coefficient de confort thermique étant utilisé pour le réglage de la température d'air, du débit d'air et de la distribution d'air au sein de l'installation de chauffage, ventilation et/ou climatisation,
**caractérisé en ce que** le système de commande (1) comporte en outre une deuxième caméra (3) sensible aux longueurs d'ondes situées dans le spectre visible et/ou dans le spectre infrarouge proche et **en ce que** le dispositif (5) de traitement et d'analyse est apte à repérer des points remarquables (401,402,403,404,405,406) pour le confort thermique de l'occupant (4) sur les images de la deuxième caméra (3) et de reporter lesdits points remarquables (401,402,403,404,405,406) sur les images de la première caméra (2), les mesures de température de l'occupant (4) étant réalisées sur ces points remarquables (401,402,403,404,405,406).

2. Système (1) selon la revendication 1, **caractérisé en ce que** la définition de la première caméra (2) est inférieure à la définition de la deuxième caméra (3).

3. Système (1) selon la revendication 2, **caractérisée en ce que** le rapport entre la définition de la première caméra (2) et la définition de la deuxième caméra (3) est compris entre 9/4000 et 9/25000.

4. Système (1) selon l'une des revendications précédentes, **caractérisé en ce que** la définition de la première caméra (2) est comprise entre 60×60 et 150×150 pixels et que la définition de la deuxième caméra (3) est comprise entre 1 et 10 mégapixels.

5. Système (1) selon l'une des revendications précédentes, **caractérisé en ce que** les première (2) et deuxième (3) caméras ont le visage (40) de l'occupant (4) dans leur champ (20, 30) respectif.

6. Système (1) selon la revendication 5, **caractérisé en ce que** les points remarquables (401,402,403,404,405,406) comprennent au moins le front (401), le nez (402) et les joues (403, 404) de l'occupant (4) du véhicule automobile.

7. Système (1) selon l'une des revendications 5 ou 6, **caractérisé en ce que** les points remarquables (401,402,403,404,405,406) comprennent également le fond (406) de l'image et une portion des vêtements (405) de l'occupant (4).

8. Système (1) selon l'une des revendications précédentes, **caractérisé en ce que** les première (2) et deuxième (3) cameras ont une focale identique.

9. Système (1) selon l'une des revendications précédentes, **caractérisé en ce que** les première (2) et deuxième (3) cameras sont positionnées côte à côte.

10. Système (1) selon l'une des revendications précédentes, **caractérisé en ce que** la deuxième caméra (3) est également utilisée pour d'autres fonctions du véhicule nécessitant une observation de l'habitacle du véhicule automobile.

11. Système (1) selon l'une des revendications précédentes, **caractérisé en ce que** la première caméra (2) est réglée pour capter les longueurs d'ondes comprises entre 3 et 50µm.

12. Procédé de commande d'une installation de chauffage, ventilation et/ou climatisation d'un véhicule automobile comportant un système de commande (1) selon l'une des revendications précédentes, ledit procédé comportant les étapes suivantes :
+ prise d'images (200) dans le dans le spectre infrarouge moyen par la première caméra (2) et prise d'images (300) dans le spectre visible et/ou dans le spectre infrarouge proche par la deuxième caméra (3),
+ analyse des images (300) de la deuxième caméra (3) par le dispositif (5) de traitement et d'analyse et repérage des points remarquables (401,402,403,404,405,406) pour le confort thermique de l'occupant (4),
+ report par le dispositif (5) de traitement et d'analyse des points remarquables (401,402,403,404,405,406) sur les images (200) de la première caméra (2) et mesure de la température à ces points remarquables (401,402,403,404,405,406),
✦ calcul d'un coefficient de confort thermique par le dispositif (5) de traitement et d'analyse à partir des mesures de la température,
✦ réglage de la température d'air, du débit d'air et de la distribution d'air au sein de l'installation de chauffage, ventilation et/ou climatisation en fonction de la valeur du coefficient de confort thermique.

## Patentansprüche

1. Steuersystem (1) für Heizungs-, Belüftungs und/oder Klimatisierungsanlage eines Kraftfahrzeugs, wobei das Steuersystem (1) Folgendes aufweist:
+ eine erste Kamera (2), die für Wellenlängen empfindlich ist, die sich im mittleren Infrarotspektrum befinden, und
✦ eine Bildbearbeitungs- und -analysevorrichtung (5), die geeignet ist, Temperaturmessungen auf den Bildern der ersten Kamera (2) durchzuführen und anhand dieser Messungen wenigstens einen Wärmekomfortkoeffizienten wenigstens eines Insassen (4) des Kraftfahrzeugs zu berechnen,
wobei der Wärmekomfortkoeffizient zur Einstellung der Lufttemperatur, des Luftdurchsatzes und der Luftverteilung innerhalb der Heizungs-, Belüftungs und/oder Klimatisierungsanlage genutzt wird,
**dadurch gekennzeichnet, dass** das Steuersystem (1) ferner eine zweite Kamera (3) aufweist, die für Wellenlängen empfindlich ist, die sich im sichtbaren Spektrum und/oder im Nahinfrarotspektrum befinden, und dadurch, dass die Bildbearbeitungs- und -analysevorrichtung (5) geeignet ist, Punkte (401, 402, 403, 404, 405, 406), die für den Wärmekomfort des Insassen (4) markant sind, auf den Bildern der zweiten Kamera (3) zu erkennen und die markanten Punkte (401, 402, 403, 404, 405, 406) auf die Bilder der ersten Kamera (2) zu übertragen, wobei die Temperaturmessungen des Insassen (4) an diesen markanten Punkten (401, 402, 403, 404, 405, 406) vorgenommen werden.

2. System (1) nach Anspruch 1, **dadurch gekennzeichnet, dass** die Auflösung der ersten Kamera (2) niedriger als die Auflösung der zweiten Kamera (3) ist.

3. System (1) nach Anspruch 2, **dadurch gekennzeichnet, dass** das Verhältnis zwischen der Auflösung der ersten Kamera (2) und der Auflösung der zweiten Kamera (3) zwischen 9/4000 und 9/25000 liegt.

4. System (1) nach einem der vorhergehenden Ansprüche, **dadurch gekennzeichnet, dass** die Auflösung der ersten Kamera (2) zwischen 60x60 Pixeln und 150x150 Pixeln und die Auflösung der zweiten Kamera (3) zwischen 1 und 10 Megapixeln liegt.

5. System (1) nach einem der vorhergehenden Ansprüche, **dadurch gekennzeichnet, dass** die erste (2) und zweite (3) Kamera das Gesicht (40) des Insassen (4) in ihrem jeweiligen Feld (20, 30) aufweisen.

6. System (1) nach Anspruch 5, **dadurch gekennzeichnet, dass** die markanten Punkte (401, 402, 403, 404, 405, 406) wenigstens die Stirn (401), die Nase (402) und die Backen (403, 404) des Insassen (4) des Kraftfahrzeugs umfassen.

7. System (1) nach einem der Ansprüche 5 oder 6, **dadurch gekennzeichnet, dass** die markanten Punkte (401, 402, 403, 404, 405, 406) ebenfalls den Hintergrund (406) des Bilds und einen Abschnitt der Kleidungsstücke (405) des Insassen (4) umfassen.

8. System (1) nach einem der vorhergehenden Ansprüche, **dadurch gekennzeichnet, dass** die erste (2) und zweite (3) Kamera eine identische Brennweite aufweisen.

9. System (1) nach einem der vorhergehenden Ansprüche, **dadurch gekennzeichnet, dass** die erste (2) und zweite (3) Kamera Seite an Seite positioniert sind.

10. System (1) nach einem der vorhergehenden Ansprüche, **dadurch gekennzeichnet, dass** die zweite Kamera (3) ebenfalls für andere Funktionen des Kraftfahrzeugs genutzt wird, die eine Beobachtung des Innenraums des Kraftfahrzeugs erfordern.

11. System (1) nach einem der vorhergehenden Ansprüche, **dadurch gekennzeichnet, dass** die erste Kamera (2) eingestellt ist, die Wellenlängen zwischen 3 und 50 µm zu erfassen.

12. Steuerverfahren einer Heizungs-, Belüftungs und/oder Klimatisierungsanlage eines Kraftfahrzeugs, die ein Steuersystem (1) nach einem der vorhergehenden Ansprüche aufweist, wobei das Verfahren die folgenden Schritte aufweist:
✦ Aufnehmen von Bildern (200) im mittleren Infrarotspektrum durch die erste Kamera (2) und Aufnehmen von Bildern (300) im sichtbaren Spektrum und/oder im Nahinfrarotspektrum durch die zweite Kamera (3),
✦ Analysieren der Bilder (300) der zweiten Kamera (3) durch die Bearbeitungs- und Analysevorrichtung (5) und Erkennen der Punkte (401, 402, 403, 404, 405, 406), die für den Wärmekomfort des Insassen (4) markant sind,
✦ Übertragen der markanten Punkte (401, 402, 403, 404, 405, 406) auf die Bilder (200) der ersten Kamera (2) durch die Bearbeitungs- und Analysevorrichtung (5) und Messen der Temperatur an diesen markanten Punkten (401, 402, 403, 404, 405, 406),
✦Berechnen eines Wärmekomfortkoeffizienten durch die Bearbeitungs- und Analysevorrichtung (5) anhand der Messungen der Temperatur,
✦ Einstellen der Lufttemperatur, des Luftdurchsatzes und der Luftverteilung innerhalb der Heizungs-, Belüftungs und/oder Klimatisierungsanlage in Abhängigkeit von dem Wert des Wärmekomfortkoeffizienten.

## Claims

1. Control system (1) for a heating, ventilation and/or air conditioning installation of a motor vehicle, said control system (1) comprising:
▪ a first camera (2) sensitive to wavelengths situated in the mid-infrared spectrum, and
▪ a device (5) for processing and analyzing images capable of carrying out temperature measurements on the images of the first camera (2) and of computing, on the basis of these measurements, at least one thermal comfort coefficient of at least one occupant (4) of the motor vehicle,
the thermal comfort coefficient being used for regulating the air temperature, the air flow rate and the air distribution within the heating, ventilation and/or air conditioning system,
**characterized in that** the control system (1) comprises moreover a second camera (3) sensitive to wavelengths situated in the visible spectrum and/or in the near-infrared spectrum and **in that** the device (5) for processing and analysis is capable of spotting noteworthy points (401,402,403,404,405,406) for the thermal comfort of the occupant (4) on the images of the second camera (3) and of transferring said noteworthy points (401,402,403,404,405,406) onto the images of the first camera (2), the temperature measurements of the occupant (4) being carried out on these noteworthy points (401,402,403,404,405,406).

2. System (1) according to Claim 1, **characterized in that** the definition of the first camera (2) is lower than the definition of the second camera (3) .

3. System (1) according to Claim 2, **characterized in that** the ratio between the definition of the first camera (2) and the definition of the second camera (3) is between 9/4000 and 9/25000.

4. System (1) according to one of the preceding claims, **characterized in that** the definition of the first camera (2) is between 60x60 and 150x150 pixels and **in that** the definition of the second camera (3) is between 1 and 10 megapixels.

5. System (1) according to one of the preceding claims, **characterized in that** the first (2) and second (3) cameras have the face (40) of the occupant (4) in their respective field of view (20, 30).

6. System (1) according to Claim 5, **characterized in that** the noteworthy points (401,402,403,404,405,406) comprise at least the forehead (401), the nose (402) and the cheeks (403, 404) of the occupant (4) of the motor vehicle.

7. System (1) according to one of Claims 5 or 6, **characterized in that** the noteworthy points (401,402,403,404,405,406) also comprise the background (406) of the image and a portion of the clothing (405) of the occupant (4).

8. System (1) according to one of the preceding claims, **characterized in that** the first (2) and second (3) cameras have identical focal lengths.

9. System (1) according to one of the preceding claims, **characterized in that** the first (2) and second (3) cameras are positioned side by side.

10. System (1) according to one of the preceding claims, **characterized in that** the second camera (3) is also used for other functions of the vehicle necessitating an observation of the interior of the motor vehicle.

11. System (1) according to one of the preceding claims, **characterized in that** the first camera (2) is adjusted to capture wavelengths between 3 and 50µm.

12. Method for controlling a heating, ventilation and/or air conditioning installation of a motor vehicle comprising a control system (1) according to one of the preceding claims, said method comprising the following steps:
▪ capture of images (200) in the mid-infrared spectrum by the first camera (2) and capture of images (300) in the visible spectrum and/or near infra-red spectrum by the second camera (3),
▪ analysis of the images (300) of the second camera (3) by the device (5) for processing and analysis and spotting of the noteworthy points (401,402,403,404,405,406) for the thermal comfort of the occupant (4),
▪ transferring by the device (5) for processing and analysis of the noteworthy points (401,402,403,404,405,406) onto the images (200) of the first camera (2) and measurement of the temperature at these noteworthy points (401,402,403,404,405,406),
▪ computation of a thermal comfort coefficient by the device (5) for processing and analysis on the basis of the temperature measurements,
▪ regulation of the air temperature, of the air flow rate and of the air distribution within the heating, ventilation and/or air conditioning installation as a function of the value of the thermal comfort coefficient.
